(19) Europäisches Patentamt
European Patent Office
Office européen des brevets

(11) **EP 3 406 665 A1**

(12) **EUROPEAN PATENT APPLICATION**
published in accordance with Art. 153(4) EPC

(43) Date of publication:
**28.11.2018 Bulletin 2018/48**

(21) Application number: **17741459.6**

(22) Date of filing: **19.01.2017**

(51) Int Cl.:
***C08L 21/00*** *(2006.01)* ***C08K 3/34*** *(2006.01)*
***C08K 7/00*** *(2006.01)* ***C08K 9/04*** *(2006.01)*
***C08L 9/02*** *(2006.01)* ***C08L 23/22*** *(2006.01)*
***C08L 27/06*** *(2006.01)* ***F16L 11/08*** *(2006.01)*
***F25B 1/00*** *(2006.01)*

(86) International application number:
**PCT/JP2017/001664**

(87) International publication number:
**WO 2017/126582 (27.07.2017 Gazette 2017/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.01.2016 JP 2016008063**

(71) Applicant: **The Yokohama Rubber Co., Ltd.**
**Minato-ku**
**Tokyo 105-8685 (JP)**

(72) Inventor: **SATO Aya**
**Hiratsuka City**
**Kanagawa 254-8601 (JP)**

(74) Representative: **Grünecker Patent- und Rechtsanwälte**
**PartG mbB**
**Leopoldstraße 4**
**80802 München (DE)**

(54) **RUBBER COMPOSITION FOR COOLANT TRANSPORT HOSE, AND COOLANT TRANSPORT HOSE**

(57) An object of the present invention is to provide a rubber composition for refrigerant-transporting hoses that can achieve both excellent refrigerant permeation resistance and excellent hose performance and to provide a refrigerant-transporting hose. The present invention relates to a rubber composition for a refrigerant-transporting hose, the rubber composition including, per 100 parts by mass of a rubber component, greater than 30 parts by mass but 180 parts by mass or less of a scale-like filler having at least one type selected from the group consisting of an amino group and an imino group in a surface; and a refrigerant-transporting hose.

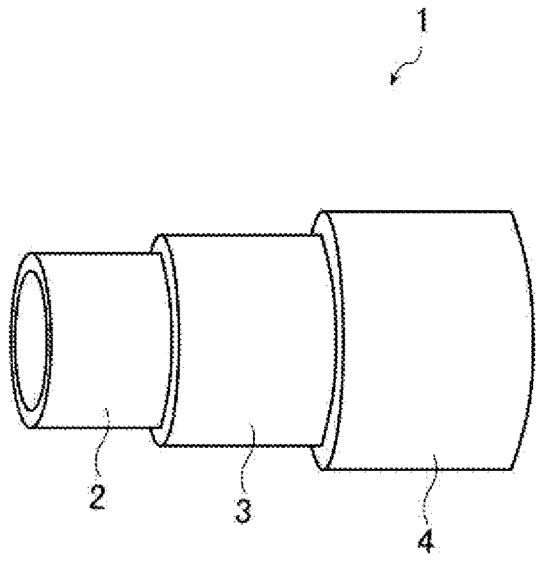


FIG. 1

EP 3 406 665 A1

**Description**

Technical Field

The present invention relates to a rubber composition for refrigerant-transporting hoses and a refrigerant-transporting hose.

Background Art

In the related art, to maintain refrigerant permeation resistance, hoses that use resin layers have been widely used as refrigerant-transporting hoses. However, use of resin layers results in a hard hose that is not flexible. In particular, since the temperature of the hose itself does not increase when the hose is used at a low pressure, the hose is used while the hose remains hard and lacks flexibility, and thus problems of noise occur when the hose is vibrated. Therefore, demands for tube rubber having refrigerant permeation resistance without the use of a resin layer have been increasing.

Meanwhile, a hose that uses a composition containing a butyl rubber or the like and a filler has been proposed (e.g. Patent Document 1).

Patent Document 1 describes a composite flexible hose having a three-layer structure, in which an inner surface rubber layer, a fiber reinforcing layer, and an outer surface rubber layer are laminated, the inner surface rubber layer containing from 5 to 30 parts by weight of layered inorganic substance that has surface-treated with an alkoxysilane compound and having an aspect ratio of 5 to 40 per 100 parts by weight of rubber component of the inner surface rubber layer, to provide a composite flexible hose having a three-layer structure, the composite flexible hose having enhanced flexibility and pliability, excellent gas barrier properties of a gas, especially an HFC-134a gas, and excellent productivity.

Citation List

Patent Literature

Patent Document 1: JP 3372475 B

Summary of Invention

Technical Problem

When the inventor of the present invention prepared a rubber composition in accordance with Patent Document 1 and evaluated the rubber composition, it was found that refrigerant permeation resistance may be low.

Furthermore, the inventor found that, when the amount of a filler contained in the rubber composition is increased, the refrigerant permeation resistance is enhanced while the hose performance (e.g. hose breaking strength and settability of metal parts) is deteriorated, and it is thus difficult to achieve both the refrigerant permeation resistance and the hose properties.

Therefore, an object of the present invention is to provide a rubber composition for refrigerant-transporting hoses that can achieve both excellent refrigerant permeation resistance and excellent hose performance.

Furthermore, another object of the present invention is to provide a refrigerant-transporting hose.

Solution to Problem

As a result of diligent research to solve the problems described above, the inventor of the present invention found that, by allowing greater than 30 parts by mass but 180 parts by mass or less of a scale-like filler having at least one type selected from the group consisting of an amino group and an imino group to be contained in a surface per 100 parts by mass of a rubber component, predetermined effects can be achieved, and thus completed the present invention.

The present invention is based on the findings described above and, specifically, solves the problem described above by the following features.

1. A rubber composition for a refrigerant-transporting hose, the rubber composition containing, per 100 parts by mass of a rubber component, greater than 30 parts by mass but 180 parts by mass or less of a scale-like filler having at least one type selected from the group consisting of an amino group and an imino group in a surface.
2. The rubber composition for a refrigerant-transporting hose according to 1 above, where the scale-like filler is at least one type selected from the group consisting of talc and mica.

3. The rubber composition for a refrigerant-transporting hose according to 1 or 2 above, where an aspect ratio of the scale-like filler is from 5 to 80.

4. The rubber composition for a refrigerant-transporting hose according to any one of 1 to 3 above, where the rubber component contains a butyl rubber.

5. The rubber composition for a refrigerant-transporting hose according to 4 above, where the rubber component further contains an acrylonitrile butadiene copolymer rubber.

6. The rubber composition for a refrigerant-transporting hose according to 5 above, where a mass ratio of the butyl rubber to the acrylonitrile butadiene copolymer rubber (butyl rubber/acrylonitrile butadiene copolymer rubber) is from 10/90 to 90/10.

7. The rubber composition for a refrigerant-transporting hose according to 5 or 6 above, where the acrylonitrile butadiene copolymer rubber contains at least an acrylonitrile butadiene rubber, and the acrylonitrile content of the acrylonitrile butadiene rubber is 25 mass% or greater of the acrylonitrile butadiene rubber.

8. The rubber composition for a refrigerant-transporting hose according to any one of 5 to 7 above, where the acrylonitrile butadiene copolymer rubber is at least one type selected from the group consisting of an acrylonitrile butadiene rubber and a blended product of an acrylonitrile butadiene rubber and a polyvinyl chloride.

9. The rubber composition for a refrigerant-transporting hose according to 8 above, where a mass ratio of the polyvinyl chloride to the acrylonitrile butadiene rubber (polyvinyl chloride/acrylonitrile butadiene rubber) in the blended product is from 10/90 to 90/10.

10. A refrigerant-transporting hose including an inner tube formed from the rubber composition for a refrigerant-transporting hose described in any one of 1 to 9 above.

Advantageous Effects of Invention

The rubber composition for refrigerant-transporting hoses and the refrigerant-transporting hose of embodiments of the present invention can achieve both excellent refrigerant permeation resistance and excellent hose performance.

Brief Description of Drawings

FIG. 1 is a perspective view illustrating a cutaway of each layer of a hose of an embodiment of the present invention.

FIG. 2 is a cross-sectional view of a cup for evaluation that is used to evaluate refrigerant permeation resistance of a rubber composition of an embodiment of the present invention.

Description of Embodiments

Embodiments of the present invention are described in detail below.

Note that in the present specification, numerical ranges indicated using "(from)... to..." include the former number as the lower limit value and the later number as the upper limit value.

In the present specification, when a component contains two or more types of substances, the content of the component indicates the total content of the two or more types of substances.

In the present specification, "achieving superior effect of the present invention" refers to the case where at least one of the refrigerant permeation resistance and the hose performance is superior.

Rubber composition for refrigerant-transporting hose

The rubber composition for refrigerant-transporting hoses of an embodiment of the present invention (rubber composition of an embodiment of the present invention) is

a rubber composition for a refrigerant-transporting hose, the rubber composition including, per 100 parts by mass of a rubber component, greater than 30 parts by mass but 180 parts by mass or less of a scale-like filler having at least one type selected from the group consisting of an amino group and an imino group in a surface.

The rubber composition of an embodiment of the present invention is thought to achieve desired effects as a result of having such a configuration. Although the reason is not clear, it is assumed to be as follows. In the present invention, due to the interaction between a rubber component and at least one type selected from the group consisting of an amino group and an imino group (also referred to as "amino group or the like") in the surface of a scale-like filler, the affinity between the rubber component and the scale-like filler is enhanced, and thus a large amount of the scale-like filler relative to the amount of the rubber component can be used. Furthermore, it is also considered that a bond is formed between the scale-like filler and the rubber component due to the interaction, and thus reinforcing effect of the

rubber component by the scale-like filler is achieved by the bond. Therefore, it is presumed that the rubber composition of an embodiment of the present invention can achieve both excellent refrigerant permeation resistance and excellent hose performance.

Each of the components contained in the rubber composition of an embodiment of the present invention will be described in detail below.

Rubber component

The rubber composition of an embodiment of the present invention contains a rubber component.

An example of a preferable aspect is one in which the rubber component is a diene rubber.

The diene rubber is not particularly limited as long as the diene rubber is used in a hose. Examples thereof include butyl rubbers, such as butyl rubber (IIR) and halogenated butyl rubber; acrylonitrile butadiene copolymer rubber; natural rubber (NR), isoprene rubber (IR), chloroprene rubber (CR), styrene-butadiene rubber (SBR), ethylene propylene diene rubber (EPDM), and butadiene rubber (BR).

Butyl rubber

Among these, the rubber component preferably contains a butyl rubber from the perspective of achieving superior effect of the present invention.

The butyl rubber is not particularly limited as long as the butyl rubber is a polymer having repeating units formed from isobutylene and isoprene. Examples thereof include known butyl rubbers.

A single butyl rubber can be used, or a combination of two or more types of butyl rubbers can be used. The method of producing butyl rubber is not particularly limited. Examples thereof include known methods.

Acrylonitrile butadiene copolymer rubber

From the perspective of achieving superior effect of the present invention and excellent oil resistance, an example of a preferable aspect is one in which the rubber component further contains an acrylonitrile butadiene copolymer rubber besides the butyl rubber.

The acrylonitrile butadiene copolymer rubber is not particularly limited as long as the acrylonitrile butadiene copolymer rubber contains a polymer having at least repeating units derived from acrylonitrile and butadiene. An example of a preferable aspect is one in which the acrylonitrile butadiene copolymer rubber contains at least an acrylonitrile butadiene rubber.

For example, the acrylonitrile butadiene copolymer rubber may be an acrylonitrile butadiene rubber; or a blended product of an acrylonitrile butadiene rubber and a polymer except the acrylonitrile butadiene rubber. In an embodiment of the present invention, the blended product corresponds to the rubber component. Note that an example of a preferable aspect is one in which the polymer except the acrylonitrile butadiene rubber does not contain a butyl rubber.

Examples of the polymer except the acrylonitrile butadiene rubber include polyvinyl chloride.

An example of a preferable aspect is one in which the acrylonitrile butadiene copolymer rubber contains at least one type selected from the group consisting of an acrylonitrile butadiene rubber (NBR) and a blended product of an acrylonitrile butadiene rubber and a polyvinyl chloride (hereinafter, also simply referred to as "NBR-PVC blended product").

All of the acrylonitrile butadiene copolymer rubber may be an NBR or a blended product (e.g. NBR-PVC blended product).

When the acrylonitrile butadiene copolymer rubber contains at least an acrylonitrile butadiene rubber, the acrylonitrile content (AN content) of the acrylonitrile butadiene rubber is preferably 25 mass% or greater, and more preferably from 32 to 50 mass%, of the acrylonitrile butadiene rubber from the perspective of achieving excellent oil resistance. As described above, the acrylonitrile content is an amount of repeating units derived from acrylonitrile in the acrylonitrile butadiene rubber.

Examples of the case where the acrylonitrile butadiene copolymer rubber contains at least an acrylonitrile butadiene rubber include the case where an acrylonitrile butadiene rubber is used as the acrylonitrile butadiene copolymer rubber, and the case where a blended product is used as the acrylonitrile butadiene copolymer rubber.

The acrylonitrile content can be measured in accordance with JIS K 6384.

Acrylonitrile butadiene rubber

The acrylonitrile butadiene rubber as the acrylonitrile butadiene copolymer rubber is not particularly limited as long as the acrylonitrile butadiene rubber is a polymer having repeating units derived from acrylonitrile and butadiene.

Examples thereof include known acrylonitrile butadiene rubbers.

NBR-PVC blended product

The NBR-PVC blended product is not particularly limited as long as the NBR-PVC blended product is a mixture formed from at least an acrylonitrile butadiene rubber and a polyvinyl chloride.

• Acrylonitrile butadiene rubber

The acrylonitrile butadiene rubber constituting the NBR-PVC blended product is not particularly limited. Examples thereof include known acrylonitrile butadiene rubbers. A single acrylonitrile butadiene rubber can be used, or a combination of two or more types of acrylonitrile butadiene rubbers can be used.

• Polyvinyl chloride

The polyvinyl chloride (PVC) constituting the NBR-PVC blended product is not particularly limited. Examples thereof include known polyvinyl chlorides. A single polyvinyl chloride can be used, or a combination of two or more types of polyvinyl chlorides can be used.

In the blended product, the mass ratio of the polyvinyl chloride to the acrylonitrile butadiene rubber (polyvinyl chloride/acrylonitrile butadiene rubber) is preferably from 10/90 to 90/10, and more preferably from 20/80 to 70/30, from the perspective of achieving superior effect of the present invention and excellent mixability/processability.

The content of the polyvinyl chloride is preferably from 0 to 80 parts by mass, and more preferably from 0 to 60 parts by mass, per 100 parts by mass of the rubber component from the perspective of excellent oil resistance.

A single acrylonitrile butadiene copolymer rubber can be used, or a combination of two or more types of acrylonitrile butadiene copolymer rubbers can be used. The method of producing the acrylonitrile butadiene copolymer rubber is not particularly limited. Examples thereof include known acrylonitrile butadiene copolymer rubbers.

In the rubber component, when the rubber component contains a butyl rubber or the rubber component further contains an acrylonitrile butadiene copolymer rubber, the butyl rubber or the butyl rubber and the acrylonitrile butadiene copolymer rubber may be the main component of the rubber component. In an embodiment of the present invention, the main component indicates that the content of the butyl rubber or the total content of the butyl rubber and the acrylonitrile butadiene copolymer rubber is from 50 to 100 mass% of the rubber component described above. Note that, when the rubber component is a butyl rubber, the content of the butyl rubber is 100 mass% of the rubber component.

When the rubber component further contains an acrylonitrile butadiene copolymer rubber, an example of a preferable aspect is one in which the total content of the butyl rubber and the acrylonitrile butadiene copolymer rubber is 100 mass% or less of the rubber component from the perspective of achieving superior effect of the present invention.

The mass ratio of the butyl rubber to the acrylonitrile butadiene copolymer rubber (butyl rubber/acrylonitrile butadiene copolymer rubber) is preferably from 10/90 to 90/10, more preferably from 10/90 to 80/20, and even more preferably from 10/90 to 70/30, from the perspective of achieving superior effect of the present invention and excellent balance of the refrigerant permeation resistance, oil resistance, and low-temperature properties.

Scale-like filler

The scale-like filler contained in the rubber composition of an embodiment of the present invention contains at least one type selected from the group consisting of an amino group ($-NH_2$) and an imino group in the surface and is a filler having a shape of scale.

The shape of the scale-like filler is not particularly limited as long as the shape is scale-like. The periphery of the scale-like filler may be irregular.

The imino group may be -N=C< or -NH-.

The amino group or the like can be bonded, directly or through organic group(s), to the surface of the scale-like filler. The organic group is not particularly limited.

The average diameter of the scale-like filler is preferably from 0.1 to 700 μm, and more preferably from 1 to 100 μm, from the perspective of excellent balance between refrigerant permeation resistance and mixability/processability.

The aspect ratio (average diameter/thickness) of the scale-like filler is preferably from 5 to 80, and more preferably from 15 to 70, from the perspective of excellent balance between refrigerant permeation resistance and mixability/processability.

In an embodiment of the present invention, the average diameter of the scale-like filler is a volume average diameter by the laser diffraction method by using a laser diffraction particle size distribution measuring device.

In an embodiment of the present invention, the thickness of the scale-like filler is an average value calculated based on measurement values obtained by observing scale-like fillers in a magnification of 10000 times by using a scanning electron microscope (SEM), selecting a plurality of scale-like fillers randomly from the observed field, and measuring the thicknesses thereof.

The scale-like filler is preferably at least one type selected from the group consisting of talc and mica, and more preferably talc, from the perspective of achieving superior effect of the present invention.

The talc and mica are not particularly limited. Examples thereof include known talc and mica.

The method of producing the scale-like filler is not particularly limited. For example, production is possible by mixing a raw material filler having a scale-like shape, and a silane coupling agent having at least one type selected from the group consisting of an amino group and an imino group (hereinafter, also referred to as "aminosilane").

The raw material filler used in the production of the scale-like filler is not particularly limited as long as the raw material filler is a scale-like filler. Examples thereof include talc and mica.

The average diameter and the aspect ratio of the raw material filler are the same as those of the scale-like filler.

The silane coupling agent used in the production of the scale-like filler is not particularly limited as long as the silane coupling agent is a compound having a hydrolyzable silyl group and at least one type selected from the group consisting of an amino group and an imino group.

Examples of the hydrolyzable silyl group include a substance to which one to three hydrolyzable groups are bonded to a silicon atom. Examples of the hydrolyzable group include alkoxy groups. Examples of the alkoxy group include a methoxy group and an ethoxy group.

When one or two hydrolyzable groups are bonded to one silicon atom, other groups are not particularly limited. Examples thereof include alkyl groups. Examples of the alkyl group include a methyl group and an ethyl group.

The amino group or the like and the hydrolyzable silyl group can be bonded to each other directly or through organic group(s).

Examples of the silane coupling agent include a compound represented by Formula (1) below.

[Chemical Formula 1]

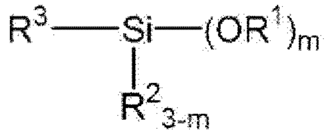

(1)

In Formula (1), $OR^1$ is an alkoxy group, $R^2$ is an alkyl group, and $R^3$ is an organic group having at least one type selected from the group consisting of an amino group and an imino group.

Examples of the alkoxy group include a methoxy group and an ethoxy group.

Examples of the alkyl group include a methyl group and an ethyl group.

The organic group having at least one type selected from the group consisting of an amino group and an imino group is not particularly limited. The organic group may have from 1 to 3 amino groups or the like. Examples of the organic group include hydrocarbon groups. Examples of the hydrocarbon group include aliphatic hydrocarbon groups (including straight-chain, branched chain, and alicyclic), aromatic hydrocarbon groups, and combinations thereof. The carbon atom constituting the aliphatic hydrocarbon group may form an imino group.

Specific examples of the silane coupling agent include
compounds having an amino group and an imino group, such as N-2-(aminoethyl)-3-aminopropylmethyldimethoxysilane and N-2-(aminoethyl)-3-aminopropyltrimethoxysilane;
compounds having an amino group, such as 3-aminopropyltrimethoxysilane and 3-aminopropyltriethoxysilane;
compounds having C=N, such as 3-triethoxysilyl-N-(1,3-dimethyl-butylidene)propylamine; and
compounds having -NH-, such as N-phenyl-3-aminopropyltrimethoxysilane and N-(vinylbenzyl)-2-aminoethyl-3-aminopropyltrimethoxysilane.

The silane coupling agent may be a salt, such as a hydrochloride, of the silane coupling agent described above.

The used amount of the silane coupling agent may be from 0.5 to 20 parts by mass per 100 parts by mass of the raw material filler.

In the present invention, the content of the scale-like filler is greater than 30 parts by mass but 180 parts by mass or less per 100 parts by mass of the rubber component. The content of the scale-like filler is preferably from 35 to 170 parts by mass, and more preferably from 40 to 150 parts by mass, per 100 parts by mass of the rubber component from the perspective of achieving superior effect of the present invention and excellent balance between refrigerant permeation resistance and mixability/processability.

Additives

The rubber composition of an embodiment of the present invention may further contain additives as necessary.
Examples of the additives include resins, fillers except the scale-like filler, softeners such as paraffin oils, stearic acid, zinc oxide, anti-aging agents, antioxidants, antistatic agents, flame retardants, vulcanizing agents such as sulfur or resin vulcanizing agents, vulcanization accelerators, crosslinking agents such as peroxides, and adhesion aids.
Each of the additives is not particularly limited. Examples thereof include known products.
The content of each of the additives may be selected as desired.
When the rubber composition of an embodiment of the present invention further contains a resin vulcanizing agent, examples of the resin vulcanizing agent include alkylphenol-formaldehyde resins and brominated alkylphenol-formaldehyde resins.
The content of the resin vulcanizing agent is preferably from 1 to 8 parts by mass, and more preferably from 2 to 6 parts by mass, per 100 parts by mass of the rubber component.

Production method, use, and the like

The production of the rubber composition of an embodiment of the present invention is not particularly limited. The production method includes kneading the rubber component and the scale-like filler described above and additives that may be used as necessary, at 30 to 150°C by using a sealed mixer, such as Banbury mixer and kneader, or a roller kneader.
Conditions for vulcanization or crosslinking of the rubber composition of an embodiment of the present invention are not particularly limited. For example, the rubber composition of an embodiment of the present invention may be vulcanized or crosslinked in a condition at 140 to 160°C while pressure is being applied.
The rubber composition of an embodiment of the present invention can be used as, for example, a rubber composition for a refrigerant-transporting hose (a hose which is used to transport a refrigerant).
There is no particular limitation on the part of the hose to which the rubber composition of an embodiment of the present invention is applied; however, an example of a preferable aspect is one in which the rubber composition of an embodiment of the present invention is used to form an inner tube (in particular, the innermost layer) of a hose.
The refrigerant that is passed through the hose is not particularly limited. Examples thereof include fluorine-based compounds. Specific examples thereof include fluorine-based compounds having a double bond, such as 1,2,3,3,3-pentafluoropropene, 1,3,3,3-tetrafluoropropene, 2,3,3,3-tetrafluoropropene (structural formula: $CF_3$-CF=$CH_2$, HFO-1234yf), 1,2,3,3-tetrafluoropropene, and 3,3,3-trifluoropropene; and saturated hydrofluorocarbons, such as HFC-134a (structural formula: $CF_3$-$CFH_2$).
A single refrigerant can be used, or a combination of two or more types of refrigerants can be used.

Refrigerant-transporting hose

The refrigerant-transporting hose of an embodiment of the present invention (hose of an embodiment of the present invention) is a refrigerant-transporting hose having an inner tube formed from the rubber composition for refrigerant-transporting hoses of an embodiment of the present invention.
The rubber composition used in the hose of an embodiment of the present invention is not particularly limited as long as it is the rubber composition of an embodiment of the present invention.
An example of the hose of an embodiment of the present invention is a hose having an inner tube, a reinforcing layer, and an outer tube that are arranged in this order.

Inner tube

The inner tube of the hose of an embodiment of the present invention is formed from the rubber composition of an embodiment of the present invention.
The inner tube may have one layer or a plurality of layers.
When the inner tube has a plurality of layers, at least the innermost layer of the inner tube is preferably formed from the rubber composition of an embodiment of the present invention. Furthermore, an interlayer rubber layer or the like may be arranged in between adjacent inner tubes.
An interlayer rubber layer or the like may be arranged in between an inner tube and a reinforcing layer adjacent to the inner tube.

Reinforcing layer

The reinforcing layer is not particularly limited as long as the reinforcing layer can be used in a hose.
Examples of the material used in the reinforcing layer includes fiber materials such as polyester-based fiber, polyamide-based fiber, aramid fiber, vinylon fiber, rayon fiber, poly-p-phenylene-benzobisoxazole fiber, and polyketone fiber, polyarylate fiber; and metal materials such as hard steel wire, including brass-plated wire, zinc-plated wire, and the like.
The shape of the reinforcing layer is not particularly limited. Examples thereof include braid wind shape and spiral wind shape.
A single reinforcing layer can be used or a combination of two or more reinforcing layers can be used.
The reinforcing layer may have one layer or a plurality of layers.
When the reinforcing layer has a plurality of layers, an interlayer rubber layer or the like may be arranged in between adjacent reinforcing layers.

Outer tube

The material constituting the outer tube is not particularly limited. For example, a rubber composition can be used. Specific examples thereof include styrene butadiene rubber-based rubber compositions, chloroprene rubber-based rubber compositions, and ethylene propylene diene rubber-based rubber compositions.
The outer tube may have one layer or a plurality of layers.
When the outer tube has a plurality of layers, an interlayer rubber layer or the like may be arranged in between adjacent outer tubes.
An interlayer rubber layer or the like may be arranged in between an outer tube and a reinforcing layer adjacent to the outer tube.
Hereinafter, a hose of an embodiment of the present invention will be described in detail with reference to the attached drawings. The hose of an embodiment of the present invention is not limited to the drawings.
FIG. 1 is a perspective view illustrating a cutaway of each layer of a hose of an embodiment of the present invention.
In FIG. 1, a hose 1 has an inner tube 2, a reinforcing layer 3 arranged adjacent to the outer peripheral side of the inner tube 2, and an outer tube 4 arranged adjacent to the outer peripheral side of the reinforcing layer 3.
The inner tube 2 is formed from the rubber composition of an embodiment of the present invention.
The method of producing the hose of an embodiment of the present invention is not particularly limited. Examples thereof include the following method.
First, the rubber composition of an embodiment of the present invention is extruded from a rubber extruder for inner tube rubber materials onto a mandrel to which a mold release agent has been applied, to form an inner tube.
A reinforcing layer is then formed on an inner tube (in the case where an adhesive layer is present, on the adhesive layer). The method of forming a reinforcing layer is not particularly limited.
Furthermore, an outer tube material (e.g. material constituting an outer tube described above) is extruded onto the reinforcing layer (in the case where an adhesive layer is present, on the adhesive layer) to form an outer tube.
Thereafter, these layers are bonded by vulcanization in a condition at 130 to 190°C for 30 to 180 minutes, and thus a hose of an embodiment of the present invention can be produced. Examples of vulcanization methods include steam vulcanization, oven vulcanization (dry heat vulcanization), and hot water vulcanization.
The refrigerants that may be passed through the hose of an embodiment of the present invention are the same as those described above.
The hose of an embodiment of the present invention can be used as, for example, a hose for air conditioners, such as air conditioners for vehicles. The hose of an embodiment of the present invention can be used for low pressure.
In the hose of an embodiment of the present invention, an example of a preferable aspect is one in which the inner tube and the outer tube are formed from a rubber composition from the perspective of reducing noise. In this case, the rubber composition constituting the outer tube may be the rubber composition of an embodiment of the present invention or a rubber composition except the rubber composition of an embodiment of the present invention. When the inner tube has a plurality of layers, at least one layer may be formed from the rubber composition of an embodiment of the present invention and the other layers may be formed from a rubber composition except the rubber composition of an embodiment of the present invention. In the rubber composition of an embodiment of the present invention or a rubber composition except the rubber composition of an embodiment of the present invention, an example of a preferable aspect is one in which greater than 50 mass% of the rubber component relative to the total amount of the polymer component is contained as the polymer component.
Note that, when the rubber composition of an embodiment of the present invention contains the blended product described above, the blended product is included in the rubber component.

An example of a preferable aspect of the hose of an embodiment of the present invention contains no resin layers from the perspective of reducing noise. In the present invention, "a hose does not contain resin layers" refers to the case where the composition containing the polymer component used to form each layer of the hose does not contain a resin or the case where the content of the resin is less than 50 mass% of the total amount of the polymer component.

Examples of the resin include polyolefin and polyamide.

Note that, in an embodiment of the present invention, the resin described above does not include a blended product of the acrylonitrile butadiene copolymer rubber. Furthermore, the resin does not include a resin vulcanizing agent. The composition constituting the resin layer does not contain the rubber composition of an embodiment of the present invention.

Example

The present invention is described below in detail using examples but the present invention is not limited to such examples.

Production of rubber composition

The components in Table 1 below (unit of content of each component: part by mass) and the common components described below were mixed by an agitator to produce a rubber composition.

Common components

The content of each component of the common components is shown in terms of an amount (part by mass) per 100 parts by mass of the rubber component shown in Table 1.

- Carbon black 29 parts by mass: ISAF (trade name: Show Black N220, available from Cabot Japan K.K.)
- Stearic acid 1 part by mass: trade name: Industrial stearic acid N, available from Chiba Fatty Acid Co., Ltd.
- Resin vulcanizing agent 5 parts by mass: Brominated alkylphenol-formaldehyde resin, Tackirol 250-1, available from Taoka Chemical Co., Ltd.
- Paraffin oil 5 parts by mass: Machine oil 22, available from Showa Shell Sekiyu K.K.
- Zinc oxide 5 parts by mass: trade name: Zinc Oxide III, available from Seido Chemical Industry Co., Ltd.

Evaluation

The following evaluations were performed by using the rubber composition produced as described above. The results are shown in Table 1.

Refrigerant permeation resistance

• Preparation of sheet

The rubber composition produced as described above was vulcanized at 153°C for 45 minutes by using a press vulcanizing machine, and a sheet having a thickness of 0.5 mm was prepared.

• Refrigerant permeation test

The evaluation method of refrigerant permeation resistance will be described below with reference to the attached drawings.

FIG. 2 is a cross-sectional view of a cup for evaluation that is used to evaluate refrigerant permeation resistance of a rubber composition of an embodiment of the present invention.

In FIG. 2, a cup for evaluation 30 has a stainless steel cup 10 (hereinafter, cup 10), the sheet 14 produced as described above, a sintered metal plate 16, fixing members 18 and 19, bolts 20, and nuts 22. A refrigerant 12 is contained inside of the cup 10.

First, the refrigerant 12 was poured into the cup 10 until the half of volume of the cup 10 was filled, the opening portion of the cup 10 was covered by the sheet 14, and the sintered metal plate 16 was placed on the upper portion of the sheet 14. Thereafter, the end portion of the cup 10, the sheet 14, and the sintered metal plate 16 were fixed through the fixing members 18 and 19 by using the bolts 20 and the nuts 22, thereby adhering the end portion of the cup 10 and the sheet 14 and the sintered metal plate 16, and thus the cup for evaluation 30 was prepared.

As a refrigerant in this example, HFC-134a (available from Du Pont-Mitsui Fluorochemicals Company, Ltd.) or HFO-1234yf (available from Du Pont-Mitsui Fluorochemicals Company, Ltd.) was used.
The cup for evaluation prepared as described above was subjected to the refrigerant permeation test in which the cup was left in a condition at 100°C for 24 hours.
The weight of the entire cup for evaluation was measured before and after the test to calculate the weight loss after the test.
The weight loss after the test and the like were applied to the following mathematical expression to calculate the gas permeation coefficient.

$$\text{Gas permeation coefficient } (\text{mg}\cdot\text{mm}/24\ \text{hr}\cdot\text{cm}^2) = (M\cdot t)/(T\cdot A)$$

In the expression, M is the weight loss (mg), t is the film thickness of the sheet (mm), T is the duration of the test (24 hr), and A is the area of permeation ($cm^2$).
A smaller gas permeation coefficient indicates superior refrigerant permeation resistance.
When the refrigerant is HFC-134a, the gas permeation coefficient is preferably 4.0 or less.
When the refrigerant is HFO-1234yf, the gas permeation coefficient is preferably 5.0 or less.

Compression set resistance

• Preparation of test piece

The rubber composition produced as described above was vulcanized at 153°C for 45 minutes by using a press vulcanizing machine, and a large test piece (thickness: 12.5 mm) stipulated in JIS K 6262 was prepared.

• Compression set resistance test

In accordance with JIS K 6262, the test piece prepared as described above was subjected to 25% compression and maintained in a condition at 70°C for 22 hours. Thereafter, after the applied pressure was removed, the test piece was left at room temperature for 30 minutes, and then the compression set was measured.
The case where the compression set was 40% or less was evaluated as achieving excellent compression set.

Physical properties of unvulcanized product

• Minimum Mooney viscosity (Vm) and scorch time (ts)

In accordance with JIS K 6300-1, by using an L-shaped rotor, the minimum Mooney viscosity (Vm) and the scorch time (ts) of the rubber composition produced as described above were determined in a condition at 125°C.
A smaller minimum Mooney viscosity indicates superior processability of the rubber composition.
A longer scorch time indicates superior processability of the rubber composition.

Tensile properties

• Preparation of sheet

The rubber composition produced as described above was vulcanized at 153°C for 45 minutes by using a press vulcanizing machine, and a sheet having a thickness of 2 mm was prepared.

• Tensile test

By using the sheet prepared as described above, the tensile test was performed at a tensile test speed of 500 mm/min at 23°C in accordance with JIS K 6251 to measure each of the tensile strength (TB), the elongation at break (EB), and the 100% modulus (M100).

Hardness

• Preparation of sheet

The rubber composition produced as described above was vulcanized at 153°C for 45 minutes by using a press vulcanizing machine, and a sheet having a thickness of 2 mm was prepared.

• Hardness measurement test

By stacking 3 pieces of sheets prepared as described above, the hardness measurement test was performed in a condition at 23°C by a type A durometer in accordance with JIS K 6253 to measure the hardness (HS) .

[Table 1]

| Table 1 | | Example | | | | | | Comparative Examples | | | | |
|---|---|---|---|---|---|---|---|---|---|---|---|---|
| | | 1 | 2 | 3 | 4 | 5 | 6 | 1 | 2 | 3 | 4 | 5 |
| Butyl rubber 1 | | 100 | 100 | 100 | 70 | 100 | 80 | 100 | 100 | 100 | 70 | 100 |
| Acrylonitrile butadiene copolymer rubber 1 | | | | | 30 | | | | | | 30 | |
| Acrylonitrile butadiene copolymer rubber 2 (NBR-PVC blended product) | | | | | | | 20 | | | | | |
| Butyl rubber 1/acrylonitrile butadiene copolymer rubber 1 or 2 (mass ratio) | | - | - | - | 2.3 | - | 4 | - | - | - | 2.3 | - |
| Scale-like filler 1 | Aminosilane-treated talc | 100 | 130 | 170 | 130 | | 130 | 30 | | | | |
| Scale-like filler 2 | Aminosilane-treated mica | | | | | 50 | | | | | | |
| Comparative scale-like filler 1 | Untreated talc | | | | | | | | 100 | 130 | 130 | |
| Comparative scale-like filler 2 | Untreated mica | | | | | | | | | | | 50 |
| Refrigerant permeation resistance (mg · mm/24h · $cm^2$) | HFC-134a | 3.0 | 2.5 | 2.0 | 3.7 | 3.0 | 3.1 | 4.1 | 3.5 | 2.4 | 3.8 | 3.0 |
| | HFO-1234yf | 4.6 | 3.6 | 3.0 | 4.0 | 4.5 | 4.7 | 6.9 | 5.3 | 4.2 | 4.0 | 4.5 |
| Compression set resistance | % | 17 | 25 | 38 | 39 | 28 | 40 | 10 | 44 | 46 | 43 | 47 |
| Physical properties of unvulcanized product | Minimum Mooney viscosity (Vm) | 55 | 60 | 75 | 70 | 51 | 88 | 48 | 51 | 55 | 60 | 40 |
| | Scorch time (t5) | 12 | 12 | 13 | 9 | 14 | 7 | 11 | 10 | 11 | 7 | 15 |
| Tensile properties | TB % | 10.9 | 10.8 | 12.0 | 11.6 | 13.4 | 11.7 | 10.6 | 10.3 | 8.7 | 11.0 | 11.8 |
| | EB MPa | 158 | 129 | 100 | 144 | 128 | 105 | 207 | 269 | 274 | 115 | 285 |
| | M100 MPa | 9.9 | 10.6 | 11.9 | 11.2 | 9.2 | 10.7 | 9.5 | 5.8 | 5.8 | 10.8 | 4.8 |
| Hardness | HS | 79 | 81 | 88 | 87 | 74 | 92 | 77 | 77 | 79 | 84 | 72 |

Details of the components described in Table 1 are as follows.

- Butyl rubber 1: trade name: BUTYL 301, available from LANXESS, weight average molecular weight: 600000
- Acrylonitrile butadiene copolymer rubber 1: acrylonitrile butadiene rubber, trade name: Nipol 1041, available from Zeon Corporation. The acrylonitrile content in the NBR: 41 mass%
- Acrylonitrile butadiene copolymer rubber 2 (NBR-PVC blended product): Nipol DN517, available from Zeon Corporation, blended product of acrylonitrile butadiene rubber and polyvinyl chloride PVC/NBR (mass ratio): 30/70 The acrylonitrile content of the NBR contained in the acrylonitrile butadiene copolymer rubber 2: 36 mass% of the NBR

- Scale-like filler 1 (aminosilane-treated talc): Mistron CB (trade name), available from Imerys Specialities Japan Co., Ltd. Talc that had at least one type selected from the group consisting of an amino group and an imino group on the surface and that had a scale-like shape. The scale-like filler 1 was surface treated with aminosilane. Average diameter: 6.1 μm, aspect ratio: 6
- Scale-like filler 2 (aminosilane-treated mica): trade name: Yamaguchi Mica S-21P, available from Yamaguchi Mica Co., Ltd. Mica that was surface treated with 3-aminopropyltriethoxysilane and that had a scale-like shape. An amino group was contained in the surface. Average diameter: 23 μm, aspect ratio: 70.
- Comparative scale-like filler 1 (untreated talc): MISTRON VAPOR (trade name), available from Imerys Specialities Japan Co., Ltd. Talc having a scale-like shape. No amino group and no imino group were contained in the surface. Surface treatment was not applied. Average diameter: 6.1 μm, aspect ratio: 6
- Comparative scale-like filler 2 (untreated mica): Yamaguchi Mica S-21, available from Yamaguchi Mica Co., Ltd. Mica having a scale-like shape. No amino group and no imino group were contained in the surface. Surface treatment was not applied. Average diameter: 23 μm, aspect ratio: 70.

As is clear from the results shown in Table 1, Comparative Example 1, in which the content of the scale-like filler was outside the predetermined range, resulted in poor refrigerant permeation resistance.
Comparative Examples 2 to 5, in which the predetermined scale-like filler was not contained but the untreated scale-like filler was contained in place of the predetermined scale-like filler, resulted in poor compression set resistances. Furthermore, Comparative Examples 2 and 3 resulted in low tensile strengths (TB).
On the other hand, examples of the present invention achieved both excellent refrigerant permeation resistances and excellent hose performances.

Reference Signs List

1 Hose
2 Inner tube
3 Reinforcing layer
4 Outer tube
10 Cup
12 Refrigerant
14 Sheet
16 Sintered metal plate
18, 19 Fixing member
20 Bolt
22 Nut
30 Cup for evaluation

## Claims

1. A rubber composition for a refrigerant-transporting hose, the rubber composition comprising, per 100 parts by mass of a rubber component, greater than 30 parts by mass but 180 parts by mass or less of a scale-like filler having at least one type selected from the group consisting of an amino group and an imino group in a surface.

2. The rubber composition for a refrigerant-transporting hose according to claim 1, wherein the scale-like filler is at

least one type selected from the group consisting of talc and mica.

**3.** The rubber composition for a refrigerant-transporting hose according to claim 1 or 2, wherein an aspect ratio of the scale-like filler is from 5 to 80.

**4.** The rubber composition for a refrigerant-transporting hose according to any one of claims 1 to 3, wherein the rubber component contains a butyl rubber.

**5.** The rubber composition for a refrigerant-transporting hose according to claim 4, wherein the rubber component further contains an acrylonitrile butadiene copolymer rubber.

**6.** The rubber composition for a refrigerant-transporting hose according to claim 5, wherein a mass ratio of the butyl rubber to the acrylonitrile butadiene copolymer rubber, butyl rubber/acrylonitrile butadiene copolymer rubber, is from 10/90 to 90/10.

**7.** The rubber composition for a refrigerant-transporting hose according to claim 5 or 6, wherein the acrylonitrile butadiene copolymer rubber contains at least an acrylonitrile butadiene rubber, and the acrylonitrile content of the acrylonitrile butadiene rubber is 25 mass% or greater of the acrylonitrile butadiene rubber.

**8.** The rubber composition for a refrigerant-transporting hose according to any one of claims 5 to 7, wherein the acrylonitrile butadiene copolymer rubber is at least one type selected from the group consisting of an acrylonitrile butadiene rubber and a blended product of an acrylonitrile butadiene rubber and a polyvinyl chloride.

**9.** The rubber composition for a refrigerant-transporting hose according to claim 8, wherein a mass ratio of the polyvinyl chloride to the acrylonitrile butadiene rubber, polyvinyl chloride/acrylonitrile butadiene rubber, in the blended product is from 10/90 to 90/10.

**10.** A refrigerant-transporting hose comprising an inner tube formed from the rubber composition for a refrigerant-transporting hose described in any one of claims 1 to 9.

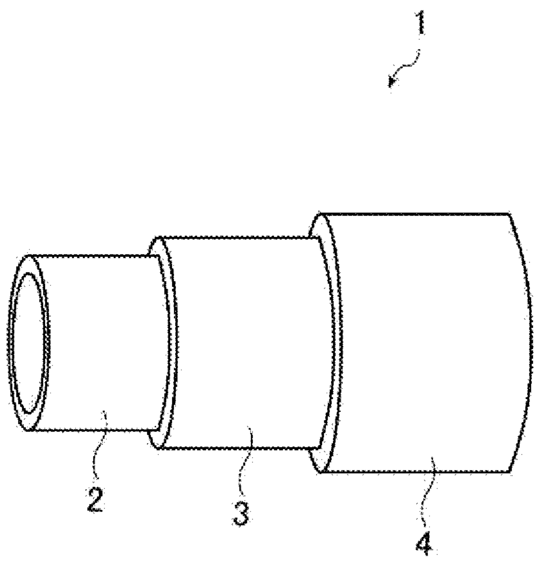


FIG. 1

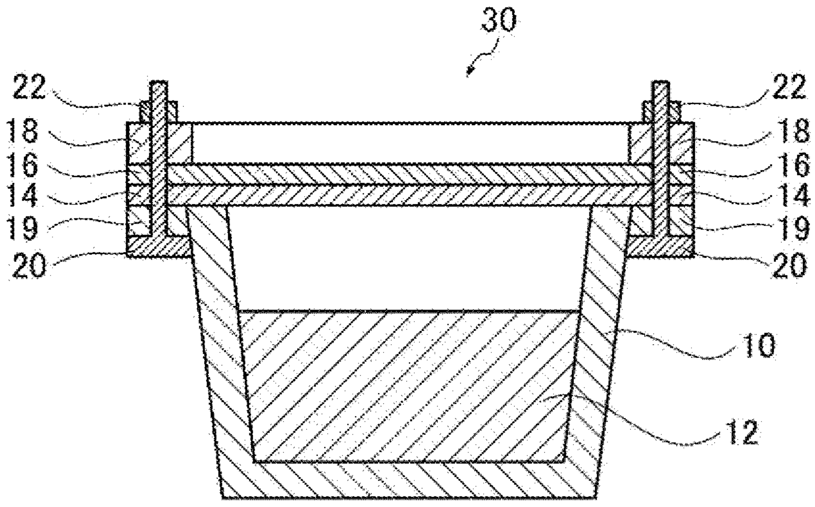


FIG. 2

## INTERNATIONAL SEARCH REPORT

International application No. PCT/JP2017/001664

A. CLASSIFICATION OF SUBJECT MATTER

*C08L21/00*(2006.01)i, *C08K3/34*(2006.01)i, *C08K7/00*(2006.01)i, *C08K9/04*(2006.01)i, *C08L9/02*(2006.01)i, *C08L23/22*(2006.01)i, *C08L27/06*(2006.01)i, *F16L11/08*(2006.01)i, *F25B1/00*(2006.01)i

According to International Patent Classification (IPC) or to both national classification and IPC

B. FIELDS SEARCHED

Minimum documentation searched (classification system followed by classification symbols)

C08L21/00, C08K3/34, C08K7/00, C08K9/04, C08L9/02, C08L23/22, C08L27/06, F16L11/08, F25B1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2013-227480 A (Tokai Rubber Industries, Ltd.), 07 November 2013 (07.11.2013), claims 1 to 9; paragraphs [0017] to [0049] (Family: none) | 1-10 |
| Y | JP 2004-035708 A (Bridgestone Corp.), 05 February 2004 (05.02.2004), claims 1 to 16; paragraphs [0028] to [0092]; fig. 1 to 5 (Family: none) | 1-10 |
| Y | JP 2010-071418 A (Tokai Rubber Industries, Ltd.), 02 April 2010 (02.04.2010), paragraphs [0028] to [0057] (Family: none) | 8-10 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 13 April 2017 (13.04.17) | 25 April 2017 (25.04.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/001664

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-011849 A (Bridgestone Corp.), 15 January 2004 (15.01.2004), paragraphs [0011] to [0067] (Family: none) | 1-10 |
| A | JP 2013-228081 A (Tokai Rubber Industries, Ltd.), 07 November 2013 (07.11.2013), paragraphs [0014] to [0064]; fig. 1 (Family: none) | 1-10 |
| A | JP 2005-023246 A (Bridgestone Corp.), 27 January 2005 (27.01.2005), claims 1 to 13; paragraphs [0022] to [0084]; fig. 1 to 4 (Family: none) | 1-10 |
| A | JP 3372475 B2 (Nichirin Co., Ltd.), 04 February 2003 (04.02.2003), claims 1 to 9 & JP 11-257551 A | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3372475 B